(19) Europäisches Patentamt
European Patent Office
Office européen des brevets

(11) Veröffentlichungsnummer: **0 465 724 A2**

# (12) EUROPÄISCHE PATENTANMELDUNG

(21) Anmeldenummer: **90124137.2**

(51) Int. Cl.[5]: **C08G 65/48**, C08L 71/12

(22) Anmeldetag: **13.12.90**

(30) Priorität: **09.06.90 DE 4018548**

(43) Veröffentlichungstag der Anmeldung:
**15.01.92 Patentblatt 92/03**

(84) Benannte Vertragsstaaten:
**DE FR GB IT NL**

(71) Anmelder: **HÜLS AKTIENGESELLSCHAFT**
**- RSP Patente / PB 15 - Postfach 13 20**
**W-4370 Marl 1(DE)**

(72) Erfinder: **Kowalczik, Udo, Dr.**
**Am Nordbad 106**
**W-4630 Bochum 1(DE)**
Erfinder: **Bartmann, Martin, Dr.**
**Elper Weg 64**
**W-4350 Recklinghausen(DE)**

## (54) Verkappte Polyphenylenether.

(57) Aufgabe war die Erhöhung der oxidativen und thermischen Stabilität von Polyphenylenethern durch Verkappen mit leicht handhabbaren Substanzen.

Die Aufgabe wurde gelöst durch Umsetzen von 100 Gewichtsteilen Polyphenylenether mit 0,5 bis 10 Gewichtsteilen bestimmter Malonsäure-Derivate bei Temperaturen von 230 bis 330 °C.

Die Formmassen auf Basis dieser verkappten Polyphenylenether werden zur Herstellung von Formteilen verwendet.

EP 0 465 724 A2

Gegenstand der vorliegenden Erfindung sind auf neuartige Weise verkappte und zugleich stabilisierte Polyphenylenether bzw. diese enthaltende Gemische, ein Verfahren zu ihrer Herstellung sowie Formmassen, die derartige verkappte Polyphenylenether enthalten.

Polyphenylenether (PPE) gehören zu einer bekannten Klasse von Polymeren, welche sich durch sehr gute physikalische und chemische Eigenschaften auszeichnen, insbesondere durch eine hohe Wärmeformbeständigkeit und eine sehr gute Beständigkeit gegenüber heißem Wasser, Säuren und Laugen.

Ein Nachteil dieser Polyphenylenether ist die mangelnde Beständigkeit nicht nur bei thermischer Belastung, sondern auch bei längerer Einwirkung von oxidierenden Einflüssen während der Verarbeitung oder des Gebrauchs. Eine derartige thermische oder oxidative Schädigung verschlechtert nicht nur die Farbe des Produkts, sondern auch die mechanischen Eigenschaften sowie die Verarbeitbarkeit. Durch Verkappung der im Polyphenylenether enthaltenen Hydroxylgruppen kann deren Oxidation verhindert werden, womit man eine wesentliche Verbesserung der oxidativen und thermischen Stabilität erreicht.

Bisher wurden verschiedene Verfahren zur Stabilisierung von Polyphenylenethern beschrieben, beispielsweise in den DE-PSS 25 05 329, 28 22 857, 28 22 859 und 28 22 434. Die dort beschriebenen Verfahren werden alle in Lösung mit einem großen Überschuß an Verkappungsmittel durchgeführt. Als Substrate dienen hauptsächlich Acylierungsreagenzien wie z. B. Acetylchlorid oder Acetanhydrid, d. h. aggressive und korrosive Verbindungen. Die entstehende Säure muß im allgemeinen durch eine zugesetzte Base gebunden werden, was den Verfahrensablauf und die Aufarbeitung kompliziert macht.

Eine beträchtlich höhere Raumzeitausbeute erzielt man beim Verkappen in der Schmelze. Ein derartiges Verfahren wird in der US-PS 3 375 228 beschrieben; als Verkappungsmittel werden Säurechloride, Säureanhydride oder Ketene eingesetzt. Wegen der hier verstärkt auftretenden Korrosionsprobleme sowie wegen des Einsatzes von toxikologisch bedenklichen Reagentien hat dieses Verfahren keine technische Bedeutung erlangt.

Eine weitere Verkappungsmethode in der Schmelze wird in der EP-OS 0 283 775 beschrieben. Dort werden die Polyphenylenether mit Salicylsäure- oder Anthranilsäurederivaten in der Schmelze behandelt. Besonders effizient sollen hierbei die linearen Polysalicylate und Salicylcarbonat sein. Eine nahezu vollständige Verkappung wird allerdings erst bei hohen Mengen des Verkappungsmittels (10 Gew.-% bezogen auf PPE) erreicht, was mit einer starken, aber nicht gewünschten Erniedrigung des Glaspunktes einhergeht (siehe dort die Beispiele in Tabelle II). Zudem wird bei der Umsetzung mit Salicylsäurederivaten nie ein hydroxylgruppenfreies Produkt erhalten, da durch Reaktionen des Verkappungsmittels OH-Gruppen gebildet werden. Für einige Anwendungen ist die Abwesenheit von OH-Gruppen jedoch erstrebenswert.

Ein weiteres Verfahren wird in der US-PS 4 806 602 beschrieben. Die Verkappung wird dort mit Anhydriden, wie z. B. Essigsäure-, Benzoesäure- oder Isatosäureanhydrid, in der Schmelze durchgeführt. Erforderlich ist ebenfalls die Anwesenheit eines basischen Katalysators. Wie die Beispiele in Tabelle 1 jedoch zeigen, kann mit dieser Methode eine effiziente Verkappung nicht erreicht werden.

Ziel der vorliegenden Erfindung war, ein einfach durchzuführendes Verfahren zu entwickeln, das die Verkappung von Polyphenylenethern mit Substanzen gestattet, die nicht aggressiv oder korrosiv sind, wobei der entstehende verkappte Polyphenylenether eine gesteigerte oxidative und thermische Stabilität aufweisen soll. Insbesondere sollte die beträchtliche Erhöhung des Molekulargewichts beim erstmaligen Aufschmelzen des frisch hergestellten Polyphenylenethers zurückgedrängt werden.

Dieses Ziel wird durch ein Verfahren erreicht, bei dem der Polyphenylenether mit bestimmten Malonsäure-Derivaten bei Temperaturen von 230 bis 330 °C behandelt wird. Gegenstand der Erfindung sind auch die so hergestellten erfindungsgemäß stabilisierten Polyphenylenether sowie Formmassen auf deren Basis.

Ausgangsprodukt für das erfindungsgemäße Verfahren sind Polymere, die aus folgenden Einheiten aufgebaut sind:

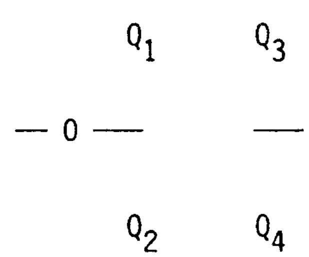

Hierbei sind $Q_1$ und $Q_2$ entweder Alkylreste mit 1 bis 10 C-Atomen, die vorzugsweise primär sind, Cycloalkylreste mit 5 bis 10 C-Atomen, Benzylreste mit 7 bis 10 C-Atomen oder Arylreste mit 6 bis 10 C-Atomen. $Q_3$ und $Q_4$ können die gleiche Bedeutung wie $Q_1$ und $Q_2$ haben; vorzugsweise bedeuten sie jedoch Wasserstoff.

Diese Polyphenylenether können nach jedem dem Stand der Technik entsprechenden Verfahren hergestellt werden. Üblicherweise werden die Phenole mit einem Sauerstoff enthaltenden Gas wie z. B. Luft in Gegenwart eines Katalysatorkomplexes oxidativ gekuppelt. Bei Einsatz eines in para-Stellung halogenierten Phenols muß eine ausreichende Menge an Säureacceptor anwesend sein. Vorzugsweise werden als Katalysatoren Kupfer-Amin-Komplexe oder manganhaltige Systeme benutzt (DE-OSS 32 24 691 und 32 24 692 sowie US-PSS 3 306 874, 3 306 875 und 4 028 341). Die Viskositätszahlen J, bestimmt nach DIN 53 728 in Chloroform bei 25 °C, liegen im Bereich von 20 bis 80 $cm^3/g$ (Konzentration 5 g/l), vorzugsweise im Bereich von 40 bis 70 $cm^3/g$. Herstellungsbedingt enthalten die Polyphenylenether phenolische Endgruppen.

Zur Herstellung dieser Polyphenylenether können beispielsweise folgende Monomere eingesetzt werden: 4-Brom-2,6-dimethylphenol, 2-Methyl-6-ethylphenol, 2,6-Diethylphenol, 2-Methyl-6-tert.-butylphenol, 4-Brom-2,6-diphenylphenol, 2-Benzyl-6-methylphenol, 2,6- Dibenzylphenol, 2,3,6-Trimethylphenol oder bevorzugt 2,6-Dimethylphenol. Selbstverständlich können auch Gemische derartiger Phenole verwendet werden.

Die Verkappung der phenolischen Gruppen des Polyphenylenethers wird mit Malonsäure-Derivaten der allgemeinen Formel

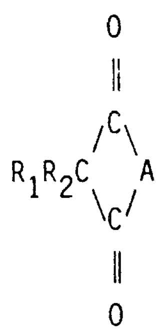

durchgeführt. Hierbei stellen $R_1$ und $R_2$ unabhängig voneinander einen aromatischen oder aliphatischen Rest mit 1 bis 25 C-Atomen oder Wasserstoff dar. A ist entweder ein Sauerstoffatom oder die Gruppe

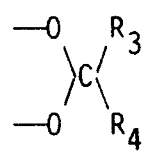 ,

wobei $R_3$ und $R_4$ unabhängig voneinander einen aliphatischen Rest mit 1 bis 10 C-Atomen oder Wasserstoff darstellen.

Derartige Substanzen sind z. B. Phenylmalonsäureisopropylidenester, Diethylmalonsäureanhydrid, Dibutylmalonsäureanhydrid oder Dimethylmalonsäureanhydrid.

Die Herstellung dieser Verbindungen ist Stand der Technik.

Die Menge des benutzten Verkappungsmittels ist natürlich abhängig von der Anzahl der vorhandenen Hydroxylgruppen und somit auch vom Molekulargewicht des eingesetzten Polyphenylenethers, bewegt sich jedoch zwischen 0,5 und 10 Gewichtsprozent, bezogen auf den eingesetzten Polyphenylenether, bevorzugt zwischen 2 und 6 Gewichtsprozent.

Die bei der erfindungsgemäßen Verkappung eventuell entstehenden Nebenprodukte sind alle flüchtig, können somit während des Verkappungsprozesses leicht entfernt werden und führen daher nicht zur Absenkung des Glaspunktes.

Die erfindungsgemäßen verkappten Polyphenylenether weisen eine verbesserte thermische und thermooxidative Beständigkeit auf.

Die erfindungsgemäße Verkappung kann nicht nur bei reinen Polyphenylenethern, sondern auch bei polyphenylenetherhaltigen Gemischen durchgeführt werden. Übliche Bestandteile sind z. B. Polystyrol, schlagzähes Polystyrol, Styrol-Butadien-Copolymere (sowohl als statistische, verschmierte als auch als Blockcopolymere), die gegebenenfalls hydriert sein können, Polyoctenamer und/oder Polyolefine. Eine Behinderung der Verkappung durch derartige Komponenten wird nicht beobachtet, der Polyphenylenetheranteil sollte jedoch zweckmäßigerweise mindestens 20 Gewichtsprozent betragen.

Das Verfahren wird bei 230 bis 330 °C, vorzugsweise in der Schmelze in einem gut knetenden Aggregat, durchgeführt. Man kann jedoch auch in Anwesenheit eines inerten Lösemittels, wie z. B. Diphenylether oder Toluol, gegebenenfalls unter Druck, arbeiten.

Das erfindungsgemäße Verfahren stellt eine Methode dar, bei der gegenüber den bekannten Verfahren eine geringere Menge an Verkappungsmittel benötigt wird. Zudem sind die hier verwendeten Verkappungsmittel gut handhabbar. Korrosionsprobleme werden nicht beobachtet.

Die erfindungsgemäßen verkappten Polyphenylenether werden als Komponenten für Formmassen verwendet. Als weitere Komponenten können alle diejenigen verwendet werden, die gemäß dem Stande der Technik für übliche polyphenylenetherhaltige Formmassen eingesetzt werden. Auch diese erfindungsgemäßen Formmassen weisen eine verbesserte thermische und oxidative Stabilität sowie wegen der Stabilisierung des Molekulargewichts eine verbesserte Verarbeitbarkeit auf. Sie konnen zur Herstellung der gleichen Formteile verwendet werden wie bekannte Formmassen auf Basis von Polyphenylenethern.

In den folgenden Beispielen wird die Erfindung verdeutlicht.

Beispiel 1

Herstellung eines Polyphenylenethers

30 kg 2,6-Dimethylphenol in 30 kg Toluol werden unter Luftbegasung innerhalb von 30 Minuten in eine gerührte Mischung aus 260 kg Toluol, 42,0 kg Methanol, 6,0 kg Morpholin, 153 g $CuCl_2 \cdot 2H_2O$ (gelöst in 850 g Methanol) sowie 153 g Di-tert.-butylethylendiamin gegeben. Nach einer Reaktionszeit von 130 Minuten wird die Reaktion durch Zugabe einer Mischung aus 75 kg Wasser, 9 kg Methanol sowie 300 g Triethanolamin und Durchleiten von $CO_2$ gestoppt. Die Wäsche der organischen Phase erfolgt zweimal mit jeweils 125 kg Wasser und 300 g Triethanolamin bei 80 °C. Das Produkt wird mit 350 kg Methanol gefällt, zweimal mit jeweils 180 kg Methanol gewaschen und anschließend getrocknet.
Ausbeute: 26,3 kg; J = 53 $cm^3/g$

Beispiele 2 bis 5 sowie A

Auf einem Berstorff-Doppelschneckenextruder ZE 25 * 33 D werden die in der Tabelle angegebenen Gewichtsanteile an Polyphenylenether aus Beispiel 1 und Verkappungsreagenz bei einer eingestellten Temperatur von 290 °C geschmolzen, gemischt und granuliert. Die Extrusion erfolgt unter Entgasungsbedingungen in der letzten Zone des Extruders.

Das Beispiel A ist nicht erfindungsgemäß; es dient nur zu Vergleichszwecken.

Der Verkappungsgrad wird mit Hilfe der FT-IR-Spektroskopie bestimmt. Vergleichswerte werden von dem unbehandelten PPE und einem mit Acetanhydrid vollständig verkappten Produkt bestimmt.

Die Bestimmung des Glaspunktes Tg erfolgt an einem Mettler TA 3000 bei einer Aufheizrate von 10 K/min.

Wie die Beispiele zeigen, wird durch den Zusatz dieser Malonsäurederivate der Anstieg der Lösungsviskosität und damit einhergehend der Aufbau des Molekulargewichts beim erstmaligen Aufschmelzen des frisch hergestellten Polyphenylenethers wirkungsvoll zurückgedrängt.

Tabelle

| Bsp. | Gew.-% PPE | Verkappungsmittel | Gew.-% Verkappungsmittel | Verkappungsgrad [%] | Tg [°C] | J-Wert [$cm^3/g$] |
|---|---|---|---|---|---|---|
| 2 | 97,5 | $A_1$ | 2,5 | 93 | 213 | 56 |
| 3 | 95 | $A_1$ | 5 | > 95 | 213 | 53 |
| 4 | 95 | $A_2$ | 5 | 88 | 211 | 58 |
| 5 | 93 | $A_2$ | 7 | 93 | 212 | 57 |
| A | 100 | - | - | 0 | 213 | 75 |

$A_1$: Phenylmalonsäureisopropylidenester
$A_2$: Diethylmalonsäureanhydrid

## Patentansprüche

1. Verkappte Polyphenylenether bzw. diese enthaltende Gemische, hergestellt aus Polyphenylenethern, die aus folgenden Einheiten aufgebaut sind:

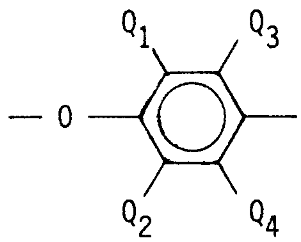

oder Gemischen, die derartige Polyphenylenether enthalten, wobei $Q_1$ und $Q_2$ entweder Alkylreste mit 1 bis 10 C-Atomen, die vorzugsweise primär sind, Cycloalkylreste mit 5 bis 10 C-Atomen, Benzylreste mit 7 bis 10 C-Atomen oder Arylreste mit 6 bis 10 C-Atomen bedeuten; $Q_3$ und $Q_4$ können die gleichen Reste wie $Q_1$ und $Q_2$ oder vorzugsweise Wasserstoff bedeuten,

und 0,5 bis 10 Gew.-%, bezogen auf den Polyphenylenether, an Malonsäure-Derivaten der allgemeinen Formel

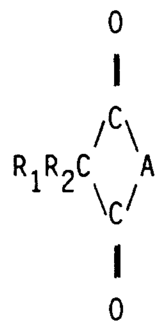 ,

wobei $R_1$ und $R_2$ unabhängig voneinander einen aromatischen oder aliphatischen Rest mit 1 bis 25 C-Atomen oder Wasserstoff darstellen und A entweder ein Sauerstoffatom oder die Gruppe

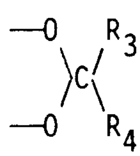

bedeutet, in der $R_3$ und $R_4$ unabhängig voneinander einen aliphatischen Rest mit 1 bis 10 C-Atomen oder Wasserstoff darstellen, wobei die Komponenten im Temperaturbereich zwischen 230 und 330 °C miteinander umgesetzt werden.

**2.** Verkappte Polyphenylenether bzw. diese enthaltende Gemische gemäß Anspruch 1,
dadurch gekennzeichnet,
daß ein Polyphenylenether auf Basis von 2,6-Dimethylphenol verwendet wird.

**3.** Verkappte Polyphenylenether bzw. diese enthaltende Gemische gemaß den Ansprüchen 1 oder 2,
dadurch gekennzeichnet,
daß der Polyphenylenether eine Viskositätszahl J von 20 bis 80 $cm^3/g$, bevorzugt 40 bis 70 $cm^3/g$, aufweist.

**4.** Verkappte Polyphenylenether bzw. diese enthaltende Gemische gemäß den Ansprüchen 1 bis 3,
dadurch gekennzeichnet,
daß die Menge an Malonsäure-Derivat 2 bis 6 Gewichtsprozent, bezogen auf den eingesetzten

Polyphenylenether, ausmacht.

**5.** Verkappte Polyphenylenether bzw. diese enthaltende Gemische gemäß den Ansprüchen 1 bis 4, dadurch gekennzeichnet, daß neben dem Polyphenylenether als weitere Bestandteile Polystyrol, schlagzähes Polystyrol, Styrol-Butadien-Copolymere, die gegebenenfalls hydriert sein können, Polyoctenamer und/oder Polyolefine vorhanden sind.

**6.** Verkappte Polyphenylenether bzw. diese enthaltende Gemische gemäß den Ansprüchen 1 bis 5, dadurch gekennzeichnet, daß die Umsetzung in der Schmelze durchgeführt wird.

**7.** Verkappte Polyphenylenether bzw. diese enthaltende Gemische gemäß den Ansprüchen 1 bis 6, dadurch gekennzeichnet, daß als Malonsäure-Derivat Phenylmalonsäureisopropylidenester, Diethylmalonsäureanhydrid, Dibutylmalonsäureanhydrid oder Dimethylmalonsäureanhydrid eingesetzt werden.

**8.** Verfahren zur Herstellung verkappter Polyphenylenether bzw. diese enthaltende Gemische entsprechend den Ansprüchen 1 bis 7, dadurch gekennzeichnet, daß die Komponenten im Temperaturbereich zwischen 230 und 330 °C miteinander umgesetzt werden.

**9.** Verfahren gemäß Anspruch 8, dadurch gekennzeichnet, daß die Umsetzung in der Schmelze durchgeführt wird.

**10.** Formmassen, die verkappte Polyphenylenether gemäß den Ansprüchen 1 bis 7 bzw. durch ein Verfahren gemäß den Ansprüchen 8 oder 9 hergestellte verkappte Polyphenylenether enthalten.